Europäisches Patentamt

European Patent Office

Office européen des brevets

(19)

(11) Veröffentlichungsnummer : **0 089 513**
**B1**

(12) **EUROPÄISCHE PATENTSCHRIFT**

(45) Veröffentlichungstag der Patentschrift :
20.08.86

(51) Int. Cl.⁴ : **H 01 M 4/73**, H 01 M 4/14

(21) Anmeldenummer : 83101849.4

(22) Anmeldetag : 25.02.83

(54) **Elektrodenplatte für Akkumulatoren.**

(30) Priorität : 19.03.82 DE 3210160

(43) Veröffentlichungstag der Anmeldung :
28.09.83 Patentblatt 83/39

(45) Bekanntmachung des Hinweises auf die Patenterteilung : 20.08.86 Patentblatt 86/34

(84) Benannte Vertragsstaaten :
AT BE CH FR GB IT LI NL SE

(56) Entgegenhaltungen :
CH-A-  229 696
DE-B- 1 596 018
DE-C-  730 503
DE-C-  873 418
FR-A-  957 777
FR-A- 2 216 682
FR-A- 2 297 499
GB-A- 1 429 189
US-A- 3 083 250
US-A- 4 055 711

(73) Patentinhaber : ACCUMULATORENFABRIK SON-
NENSCHEIN GMBH
Thiergarten Postfach 1180
D-6470 Büdingen 1 Oberhessen (DE)

(72) Erfinder : Tuphorn, Hans
Grünwaldweg 8 a
D-6470 Büdingen 1 (DE)
Erfinder : Schroeder, Heinz
In der Langgewann 6
D-6470 Büdingen 1 (DE)

(74) Vertreter : Baumann, Eduard, Dipl.-Phys.
Postfach 1201 Sattlerstrasse 1
D-8011 Höhenkirchen/München (DE)

## Beschreibung

Die Erfindung bezieht sich auf eine Elektrodenplatte gemäß dem Oberbegriff des Anspruches 1.

Aus der Deutschen Offenlegungsschrift 2716131 ist ein Elektrodengitter bekannt, bei dem der Stromableiter aus einem äußeren Rahmen, aus einer Anschlußfahne und strahlenförmig in Richtung auf die Anschlußfahne sowie den benachbarten Rahmenteil zulaufenden Stromableitstäben besteht. Innerhalb dieser Stromableitstäbe sind Ösen vorgesehen. In den so entstandenen Rahmen ist ein Kunststoffgitter eingespritzt, welches durch thermisches Verschweißen an den Ösen am Stromableiter verankert ist.

Ähnliche Gitter sind in den Deutschen Offenlegungsschriften 3012704, 2823871 und im US-Patent 3690950 beschrieben.

Aus der Deutschen Offenlegungsschrift 2305309 ist eine Akkumulatorplatte und ein Verfahren zu ihrer Herstellung beschrieben, bei dem ein Bleigitter aus parallel verlaufenden Bleistäben und ein damit integriertes Kunststoffgitter für die Aufnahme der aktiven Masse vorgesehen ist. Diese Platte ist beidseitig mit elektrolytdurchlässigen Matten abgedeckt.

Schließlich ist aus der Deutschen Patentschrift 2710907 ein kombinierter Metall-/Kunststoff-Träger für die Elektroden von Akkumulatoren bekannt, welcher das Gewicht von Akkumulatoren verringern soll. Hier ist der Stromableiter gitterförmig ausgebildet und bildet ein Bleigerüst, um den Stromtransport von den einzelnen Stellen der Elektrodenplatten zur Anschlußfahne zu bewerkstelligen. Das Kunststoffgitter hat dabei im wesentlichen die Aufgabe, die aktiven Massen festzuhalten. Auch der äußere Rahmen der Elektrode selbst kann durch den Kunststoff gebildet werden. Als Kunststoffauflage werden dabei zwei wellenförmig ausgebildete Gewebe auf das Bleigerüst aufgelegt, so daß sie sich durch die Unterbrechungen desselben hindurch berühren. An den Berührungsstellen werden die beiden Kunststoffauflagen thermisch miteinander verschweißt. In den dadurch entstandenen äußeren Ausbuchtungen nehmen die beiden Armiermatten die Aktivmassen des Elektrodenträgers auf. Sodann werden die beiden Matten der Kunststoffauflage mit feinporigen Separatorauflagen aus Kunststoff verschweißt, wobei gleichzeitig die Aktivmassen festgehalten werden. Dieses Verfahren ist relativ aufwendig, der Materialverbrauch für die Kunststoffauflagen verhältnismäßig groß, die erforderlichen vielen Schweißvorgänge machen die Herstellung auch aufwendig. Insbesondere hat dieser Träger jedoch den Nachteil, daß viel nutzloser Raum vorhanden ist, nämlich im wesentlichen der ganze Innenbereich zwischen den beiden Gewebematten der Kunststoffauflage.

Der Erfindung liegt die Aufgabe zugrunde, eine Elektrodenplatte gemäß dem Oberbegriff des Anspruches 1 so auszubilden, daß die Herstellung vereinfacht und verbilligt wird, der Anteil des eingesetzten Kunststoffvolumens zur Aktivmasse trotz gleichbleibender Armierwirkung verringert und durch den entsprechend erhöhten Anteil an Aktivmasse die Kapazität pro Volumeneinheit erheblich erhöht wird.

Die Aufgabe wird erfindungsgemäß durch die Merkmale des Kennzeichens des Anspruches 1 gelöst. Weitere Ausbildungen der Erfindung sind in den Unteransprüchen dargestellt.

Ein Aspekt der Erfindung besteht darin, anstelle einer auf beiden Seiten angebrachten Kunststoffgitter nur ein einziges Kunststoffgitter zu verwenden, wodurch erheblich weniger Material verbraucht wird, beispielsweise gegenüber der eingangs erwähnten Deutschen Patentschrift 2710907 weniger als das halbe Material. Die Anordnung des Kunststoffgitters direkt in den Gitterfeldern des Metallträgers ermöglicht es, fast das ganze Volumen für die aktive Masse auszunutzen. Dadurch wird nicht nur elektrochemisch inaktives Material eingespart, sondern das für die aktiven Massen benötigte Volumen erheblich erhöht. Die in der Volumeneinheit untergebrachte größere Menge an Aktivmasse ist jedoch direkt der Kapazität pro Volumeneinheit proportional, die somit ebenfalls erheblich erhöht wird.

Dadurch, daß die Querstege nach dem Einpastieren der aktiven Masse an der Elektrodenplatte frei liegen, können sie mit den Armiermatten fest durch Schweißen verankert werden. Dadurch ergibt sich eine fest verankerte Armierung der aktiven Massen, was eine Voraussetzung für eine lange Lebensdauer der Elektrodenplatten ist. Gleichzeitig kann der Anteil an inaktivem Kunststoffmaterial verringert werden.

Das Kunststoffgitter ist aus Kunststoffstegen gebildet, die sich in den Querstegen kreuzen. Es ist möglich, daß das Kunststoffgitter aus einzelnen Elementen gebildet wird, die jeweils am Stromableiter, üblicherweise aus Blei, verankert werden.

Die Verankerung erfolgt zweckmäßigerweise in einem einzigen Herstellungsgang zusammen mit dem Spritzgießen des Kunststoffgitters auf den fertigen Stromableiter. Die Verankerung erfolgt zweckmäßigerweise in Ösen, die innerhalb des Stromableiters vorgesehen sind und vorzugsweise einen veränderlichen Querschnitt aufweisen, um eine Verankerung zu ermöglichen. Das Kunststoffgitter kann auf einer Seite des Stromableiters angebracht werden der von dieser Seite in die Ösen eingeflossene Kunststoff hält dann das Kunststoffgitter am Stromableiter fest, wenn sich die Öse in Richtung der dem Kunststoffgitter abgewandten Seite erweitert.

Nach einer bevorzugten Ausführungsform werden die Querstege nicht in den Kreuzungspunkten des Kunststoffgitters gebildet, sondern in den Ösen des Stromableiters und erfüllen somit gleichzeitig die Funktion der Verankerung des Kunststoffgitters am Stromableiter.

Ausführungsbeispiele der Erfindung sind in der Zeichnung dargestellt.

Es zeigt :

Figur 1 eine Draufsicht auf eine Elektrodenplatte,

Figur 2 einen Schnitt längs der Linie II-II von Figur 1,

Figur 3 eine Einzelheit des Schnittes von Figur 2 in vergrößerter Darstellung,

Figur 4 einen Querschnitt durch eine Verankerung längs der Linie IV-IV von Figur 1,

Figur 5 einen Querschnitt durch die Verankerung gemäß Figur 4 längs einer Linie V-V von Figur 1.

Figur 6a den in Figur 1 eingekreisten Kreuzungspunkt des Stromableiters mit den Kunststoffstegen in vergrößerter Darstellung,

Figur 6b einen Schnitt längs der Linie VI-VI von Figur 6a,

Figur 6c einen Schnitt längs der Linie VII-VII von Figur 6a,

Figur 7 ein anderes Ausführungsbeispiel der Erfindung in Draufsicht, bei dem die Querstege in den Kreuzungspunkten der Gitterstäbe des Stromableiters und gleichzeitig den Verankerungspunkten mit dem Kunststoffgitter angeordnet sind,

Figur 8a einen Schnitt längs der Linie VIII-VIII von Figur 7 in vergrößerter Darstellung,

Figur 8b einen Schnitt durch die Linie VIII-VIII von Figur 7, jedoch mit anderer Ausbildung von Öse und Quersteg.

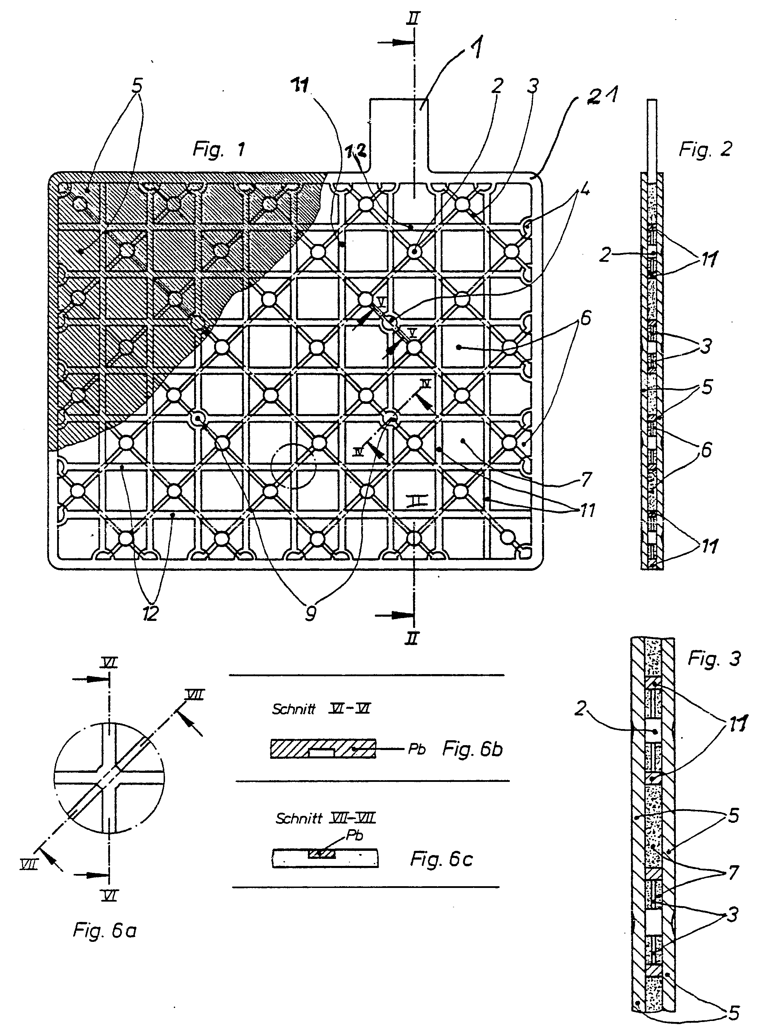

In Figur 1 umfaßt der Stromableiter die Ableitfahne 1 den Umfangsrahmen 21, sowie eine erste parallele Anordnung von Gitterstäben 11 und eine zweite im wesentlichen senkrecht dazu stehende Anordnung von Gitterstäben 12, die miteinander in den Kreuzungspunkten sowie mit dem Umfangsrahmen verschweißt sind. Mit dem gitterförmigen Netz des Stromableiters verankert ist ein Kunststoffnetz, das aus einer ersten Reihe von parallel zueinander angeordneten Kunststoffstegen 3 und einer zweiten senkrecht zueinander angeordneten Reihe von parallelen Kunststoffstegen besteht. Im Ausführungsbeispiel gemäß Figur 1 kreuzen sich diese Kunststoffstege 3 in der Mitte einer Zelle 6 des Stromableiter-Gitters 1, 11, 12. In diesen Kreuzungspunkten ist jeweils ein Quersteg 2 vorgesehen, der vorzugsweise einstückig mit den erheblich dünneren Kunststoffstegen 3 ausgebildet ist. Die Länge dieser Kunststoffstege ist so bemessen, daß sie mit der Gesamtbreite des Elektrodengitters zusammenfallen, und daß nach dem Einpastieren der Aktivmassen in die verbleibenden Räume die nach außen stehenden Seitenflächen der Querstege 2 frei von Aktivmasse bleiben, um Schweißstellen für die an beiden Seiten anschließend angebrachten Armierungsmatten 5 zu bilden, die mit den letzteren thermisch verschweißt werden.

In Figur 1 sind weiterhin Ösen 4 angedeutet, die an bestimmten Kreuzungspunkten des Stromableiters vorgesehen sind, und in welche bei dem Einspritzen des Kunststoffgitters in den fertigen Stromableiter Kunststoff eindringt, um so eine Verankerung des Kunststoffgitters mit dem Stromableiter zu bewirken.

Figur 2 zeigt einen Schnitt durch die Darstellung von Figur 1 längs der Linie II-II, wobei gleiche Teile mit gleichen Bezugzeichen versehen sind.

Figur 3 zeigt die Darstellung von Figur 2 in vergrößertem Maßstab, wobei zusätzlich die in die Zwischenräume einpastierte Aktivmasse 7 dargestellt ist. Die beidseitig angeordneten Armierungsmatten 5 dienen der stabilen Befestigung der Aktivmassen. Sie bestehen aus porösem, elektrolytdurchlässigem Material, vorzugsweise aus Kunststoff wie Polyestervlies.

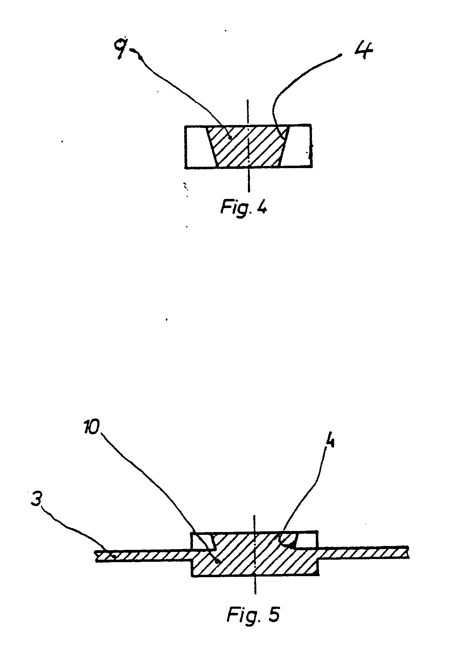

Figur 4 zeigt im Schnitt und in vergrößerter Darstellung eine Kunststoffverankerung 9 in einer Öse 4 der Blei-Gifferstäbe 1, 11, 12 längs der Linie IV-IV von Figur 1, und Figur 5 zeigt die gleiche Darstellung in einer Richtung senkrecht zur Richtung von Figur 4 längs einer Linie V-V von Figur 1, wobei außer der Öse 4 und der Kunststoffverankerung 10 die einstückig mit der Kunststoffverankerung ausgebildeten Kunststoffstege 3 zu sehen sind, die nach beiden Seiten verlaufen.

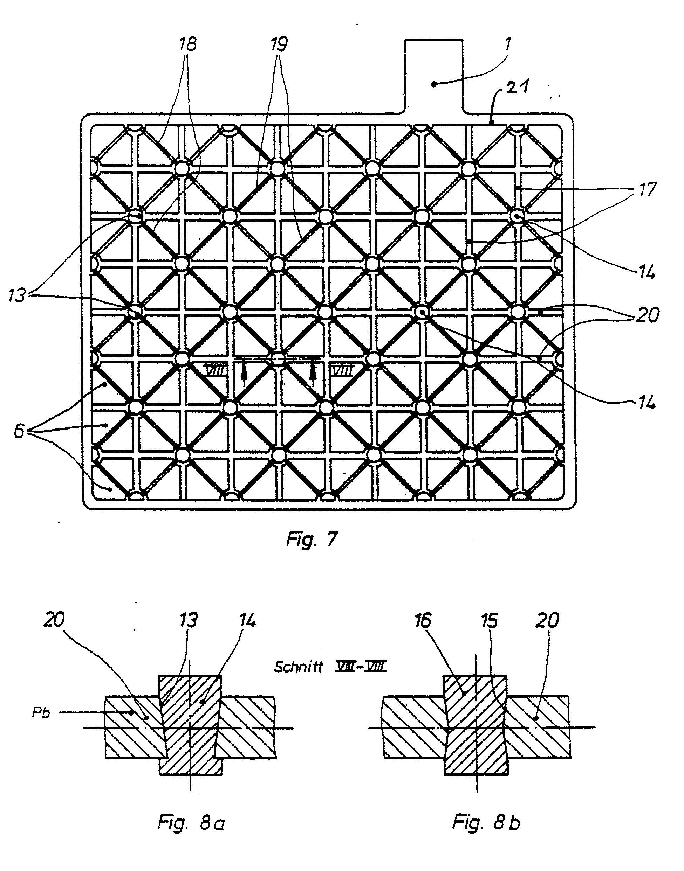

Figur 6a zeigt die in Figur 1 eingekreiste Einzelheit eines Kreuzungspunktes der Gitterstäbe 11, 12 mit einem Kunststoffsteg 3 in vergrößerter Darstellung.

Figur 6b zeigt einen Schnitt längs der Linie VI-VI von Figur 6a, Figur 6c zeigt einen dazu um 45 Grad versetzten Schnitt längs der Linie VII-VII von Figur 6a.

Figur 7 zeigt ein anderes Ausführungsbeispiel der Erfindung, wobei gleiche Teile mit gleichen Bezugzeichen versehen sind, in Draufsicht. Hier wird das Gitter des Stromableiters durch die Anschlußfahne 1 nebst Umfangsrahmen 21 und durch eine erste Reihe von parallel zueinander angeordneten Gitterstäben 17 sowie eine zweite Reihe von senkrecht dazu stehenden, ebenfalls parallel zueinander angeordneten Gitterstäben 20 gebildet, so daß ebenfalls Gitterfelder 6 entstehen. In den Kreuzungspunkten des Stromableiters sind Ösen 13 bzw. (nicht sichtbar) 15 vorgesehen. Hinter dem so entstandenen Stromleiter ist diagonal verlaufend, wie im ersten Ausführungsbeispiel, ein Kunststoffgitter eingelassen, das aus einer ersten Reihe paralleler Kunststoffstege 18 und aus einer zweiten Reihe, senkrecht zur ersten Reihe stehenden Reihe von Kunststoffstegen 19 besteht. Während des Herstellungsvorganges des Kunststoffgitters fließt das Spritzgußmaterial in die Ösen 13 bzw. 15 ein und verankert auf diese Weise das Kunststoffgitter mit dem Stromableiter. Die Form dieser Verankerungen 14 bzw. 16 (Figur 8a) läßt sich so gestalten, daß sie gleichzeitig als Querstege dienen, deren von Aktivmasse frei gebliebene Seitenflächen mit den Armierungsmatten 5 verschweißt werden können.

In Figur 8a ist in vergrößerter Darstellung ein Schnitt längs der Linie VIII-VIII von Figur 7 dargestellt, wobei außer dem Blei-Gitterstab 20 eine Öse 13 mit nach vorne zunehmendem Durchmesser gezeigt ist, in welcher die Verankerung 14 dargestellt ist, welche gleichzeitig einen Quersteg bildet. In Figur 8b ist ein weiteres Ausführungsbeispiel der Erfindung dargestellt, wobei die Öse 15 innerhalb des Gitterstabes 20 bzw. des Kreuzungspunktes des Gitterstabes 20 mit einem senkrecht dazu stehenden Gitterstab 17 so ausgebildet ist, daß die engste Stelle der Öse etwa in der Mitte vorgesehen ist und sich die Öse nach beiden Seiten hin erweitert, so daß eine stabile Verankerung des Kunststoffgitters mit dem Stromableiter ermöglicht wird. Diese symmetrische Ausführung einer Verankerung 16 ist besonders einfach in der Herstellung und ebenfalls gleichzeitig als Quersteg für das thermische Verschweißen mit den aufgebrachten Armierungsmatten 5 geeignet.

### Patentansprüche

1. Elektrodenplatte für Akkumulatoren, insbesondere Bleiakkumulatoren, mit einem Stromableiter, der eine Ableitfahne (1), einen Umfangsrahmen (21) und gitterförmige Stromableitstäbe (11, 12) zur Bildung von Gitterfeldern (6) innerhalb des Umfangrahmens (21) aufweist, mit einem an den Gitterfeldern verankerten Kunststoffgitter (2, 3, 4 ; 18, 19 ; 14, 16), sowie mit an beiden Seiten der Elektrodenplatte angeordneten Armiermatten (5), wobei die Gitterfelder aus einer Reihe von im wesentlichen parallel zueinander angeordneten Gitterstäben (11, 17) und aus in einem Winkel dazu angeordneten weiteren Gitterstäben (12, 20) gebildet werden, dadurch gekennzeichnet,

a) daß sich Kunststoffstege (3) des Kunststoffgitters in Querstegen (2 ; 14 ; 16) aus Kunststoff kreuzen,

b) daß die Querstege (2 ; 14 ; 16) in den Gitterfeldern (6) oder den Kreuzungspunkten der Gitterstäbe (11, 12) angeordnet sind und eine solche Länge aufweisen, daß die Seitenflächen der Querstege frei von einpastierter Masse bleiben,

c) daß die Seitenflächen der Querstege mit den Armiermatten (5) verbunden sind.

2. Elektrodenplatte nach Anspruch 1, dadurch gekennzeichnet, daß die Querstege (2 ; 14 ; 16) aus thermoplastischem Kunststoff bestehen, und daß die Seitenflächen der Querstege mit den Armierungsmatten (5) thermisch verschweißt sind.

3. Elektrodenplatte nach Anspruch 1 oder 2, dadurch gekennzeichnet, daß die Kunststoffstege (3) und die Querstege (2 ; 14, 16) einstückig ausgebildet und auf die durch die Gitterstäbe (11, 12) gebildeten Gitterfelder (6) im Spritzgießverfahren aufgespritzt sind.

4. Elektrodenplatte nach einem der Ansprüche 1 bis 3, dadurch gekennzeichnet, daß im Stromableiter Ösen (4 ; 13 ; 15), vorzugsweise mit sich nach einer oder beiden Seiten erweiterndem Querschnitt, vorgesehen sind, und daß die Kunststoffstege (3) und Querstege (2 ; 14 ; 16) in die Gitterfelder (6) des fertigen Stromableiters im Spritzgießverfahren eingespritzt sind, wobei sich der in die Ösen einfließende Kunststoff mit dem Stromableiter verankert.

5. Elektrodenplatte nach einem der Ansprüche 1 bis 4, dadurch gekennzeichnet, daß der in die Ösen (4 ; 13 ; 15) eingeflossene Kunststoff so geformt ist, daß er gleichzeitig die Querstege (2 ; 14 ; 16) bildet.

### Claims

1. An electrode plate for storage batteries, especially lead-acid storage batteries, comprising a current collector which includes a collecting lug (1), a circumferential frame (21) and grid-shaped current collecting bars (11, 12) for forming grid fields (6) within the circumferential frame (21), comprising a plastics grid (2, 3, 4 ; 18, 19 ; 14, 16) anchored to the grid fields, and comprising armouring mats (5) disposed on either side of the electrode plate, wherein the grid fields are formed by a row of grid bars (11, 17) disposed in substantially parallel relationship and by further grid bars (12, 20) disposed at an angle thereto, characterised in

a) that plastics webs (3) of the plastics grid intersect each other in transverse webs (2 ; 14 ; 16) of plastic material,

b) that the transverse webs (2 ; 14 ; 16) are arranged in the grid fields (6) or the points of intersection of the grid bars (11, 12) and have such a length that the side faces of the transverse webs remain free from pasted composition,

c) that the side faces of the transverse webs are joined to the armouring mats (5).

2. An electrode plate as claimed in claim 1, characterised in that the transverse webs (2 ; 14 ; 16) are made of thermoplastic plastics, and that the side faces of the transverse webs are heat-sealed to the armouring mats (5).

3. An electrode plate as claimed in claim 1 or claim 2, characterised in that the plastics webs (3) and the transverse webs (2 ; 14 ; 16) are integrally formed and are injected by injection moulding through the grid fields (6) formed by the grid bars (11, 12).

4. An electrode plate as claimed in any of the claims 1 to 3, characterised in that the current collector has eyes (4 ; 13 ; 15), preferably of unilaterally or bilaterally expanding cross-section, provided therein, and that the plastics webs (3) and the transverse webs (2 ; 14 ; 16) are injected into the grid fields (6) of the finished current collector by injection moulding, whereby the plastic material flowing into the eyes is anchored to the current collector.

5. An electrode plate as claimed in any of the claims 1 to 4, characterised in that the plastics material which has flown into the eyes (4 ; 13 ; 15) is of such a shape that it will simultaneously constitute the transverse webs (2 ; 14 ; 16).

### Revendications

1. Plaque-électrode pour accumulateurs, en particulier pour accumulateurs à plomb, composée d'un conducteur comprenant une languette conductrice (1), un cadre (21) et des barreaux conducteurs de courant (11, 12) disposés en forme de grille et formant des cases de grille (6) à l'intérieur du cadre (21), d'une grille en matière plastique (2, 3, 4 ; 18, 19 ; 14, 16) ancrée sur les cases de grille (6), ainsi que de nattes de soutien (5) disposées des deux côtés de la plaque-électrode, les cases de grille étant formées d'une série de barreaux de grille disposés parallèlement les uns aux autres (11, 17) et d'une autre série de barreaux parallèles (12, 20) disposée en un certain angle par rapport à la première série de barreaux, caractérisée en ce que

a) les barrettes (3) de la grille en matière plastique se croisent sur des traverses en matière plastique (2 ; 14 ; 16),

b) que les traverses (2 ; 14 ; 16) sont disposées dans les cases de grille (6) ou aux points de croisement des barreaux de grille (11, 12) et présentent une longueur telle que les faces latérales des traverses restent libres de matières empâtées,

c) que les surfaces latérales des traverses sont liées aux nattes de soutien (5).

2. Plaque-électrode selon la revendication 1, caractérisée en ce que les traverses (2 ; 14 ; 16) sont réalisées en matière thermoplastique et que les surfaces latérales des traverses sont soudées thermiquement avec les nattes de soutien (5).

3. Plaque-électrode selon la revendication 1 ou 2, caractérisée en ce que les barrettes en matière plastique et les traverses (2 ; 14 ; 16) ne forment qu'une seule pièce et sont moulées par injection dans les cases de grille (6) délimités par les barreaux de grille (11, 12).

4. Plaque-électrode selon l'une des revendications 1 à 3, caractérisée en ce que des œillets (4 ; 13 ; 15), de préférence des œillets dont la section transversale augmente des deux côtés vers l'extérieur, sont prévus dans le conducteur et que les barrettes en matière plastique (3) et les traverses (2 ; 14 ; 16) sont moulées par injection dans les cases de grille (6) du conducteur fini, de façon à ce que la matière plastique coulant dans les œillets s'ancre dans le conducteur.

5. Plaque-électrode selon l'une des revendications 1 à 4, caractérisée en ce que la matière plastique coulée dans les œillets (4 ; 13 ; 15) est façonnée de telle sorte à former en même temps les traverses (2 ; 14 ; 16).

0 089 513

Fig. 1

Fig. 2

Fig. 3

Schnitt VI–VI

Pb    Fig. 6b

Schnitt VII–VII

Pb

Fig. 6c

Fig. 6a

9      4

Fig. 4

10      4

3

Fig. 5

Fig. 7

Schnitt VII-VIII

Fig. 8a

Fig. 8b